# EUROPEAN PATENT APPLICATION

(11) **EP 4 420 851 A1**
(43) Date of publication of application: **28.08.2024**
(21) Application number: 23158831.0
(22) Date of filing: 27.02.2023
(51) Int. Cl.: B29B 17/04, B02C 17/10, B02C 17/18

(54) **PULVERIZER**

(71) Applicant: Regenstech S.r.l. Societa' Benefit, 48123 Ravenna (IT)
(72) Inventor: PAZZI, Maria Silvia, 48123 RAVENNA (IT)
(74) Representative: Modiano, Micaela Nadia

(57) **Abstract**

A pulverizer (1), comprising: a ball mill (2) provided with a steel drum (3) within which a plurality of steel balls (4) is contained, configured to obtain a powder of which at least 60% by mass has a particle size comprised between 25 µm and 500 µm, preferably comprised between 200 µm and 300 µm, i.e., with a predominant size of each powder grain comprised between 25 µm and 500 µm, preferably comprised between 200 µm and 300 µm; a refrigeration unit (5) suitable for the delivery of a carrier fluid at a temperature below -150° C; a refrigeration circuit (6) for the refrigeration of at least one portion of the steel drum (3) provided with a sleeve (7) for the inflow of the carrier fluid dispensed by the refrigeration unit (5) and an ejection sleeve (9) for the ejection of the carrier fluid at the end of its complete circulation in the circuit (6) and its transfer to an intake duct (10) of the refrigeration unit (5).

## Description

The present invention relates to a pulverizer particularly suitable for reducing materials selected from fabrics, hides and the like (whether of natural origin or obtained through synthetic processes) into very small fragments.

An increasingly significant problem that is emerging as a result of the spread of circular economy concerns the ways in which materials are recycled.

In fact, while recycling is easy for some materials (consider metals or glass), there are others (which intrinsically would have a high economic value) that are difficult to process.

Among these it is appropriate to mention fabrics, hides, and in general all those materials used for the production of clothing and/or upholstery and/or furniture components and the like.

While by recycling polymeric materials it is possible to produce fabrics and materials with similar characteristics (consider polyester or polyethylene waste with which it is possible to obtain yarns, which can be supplied to the textile industry for the production of new fabrics that can be used to provide items of clothing), starting from textile or tanning material waste it has not been possible so far to provide a recycling that allows to obtain new raw material for the same industrial sector.

This same Applicant is the proprietor of WO2022089782, which relates to an apparatus and a method for the production of items of clothing and the like from textile waste and/or tanning material waste and/or waste of materials of the clothing industry and/or materials with equivalent characteristics.

The technical solution described in WO2022089782 is found to be suitable for the complete achievement of the preset goals.

As a result of research activities on the apparatus according to WO2022089782, it has been found that in order to obtain a semifinished product that can be processed more easily to obtain a high-quality finished product it would be necessary to optimize the pulverization of the material chosen from waste fabrics, excess production and/or stock remainders, waste clothing, waste leather, waste clothing accessories, and the like.

Currently there are no pulverizers of a known type at the industrial level that are capable of performing effectively (thus ensuring a productivity of sufficient interest for industrial use) the operations envisaged by the invention, and this makes it impossible to implement the teachings of WO2022089782 even for the production of items of clothing with high quality standards (or semifinished products suitable for their production).

The aim of the present invention is to solve the problems described above, providing a pulverizer suitable to operate on a stochastic mix of materials selected from waste fabrics, excess production and/or stock remainder, waste items of clothing, waste leather, waste clothing accessories, and the like.
Within this aim, an object of the invention is to devise a pulverizer suitable to provide a material that is divided into very small and homogeneous particles.

Another object of the invention is to devise a pulverizer suitable to provide a material that can be used to implement the teachings of WO2022089782 for the production of items of clothing and/or upholstery and/or furniture items with high quality standards.

Another object of the invention is to devise a pulverizer suitable to provide a material that can be used to implement the teachings of WO2022089782 for the production of semifinished products suitable for the production of items of clothing and/or upholstery and/or furniture items with high quality standards.

A further object of the present invention is to provide a pulverizer that has low costs, is relatively simple to provide in practice and of assured application.

This aim and these and other objects that will become more apparent hereinafter are achieved by a pulverizer, characterized in that it comprises
- a ball mill provided with a steel drum within which a plurality of steel balls is contained, configured to obtain a powder of which at least 60% by mass has a particle size comprised between 50 µm and 400 µm, preferably comprised between 200 µm and 300 µm, i.e., with the prevailing size of each powder grain comprised between 50 µm and 400 µm, preferably comprised between 200 µm and 300 µm;
- a refrigeration unit suitable for the delivery of a carrier fluid at a temperature below -150° C;
- a refrigeration circuit for the refrigeration of at least one portion of said steel drum provided with a sleeve for the inflow of said carrier fluid dispensed by said refrigeration unit and an ejection sleeve for the ejection of said carrier fluid at the end of its complete circulation in the circuit and its transfer to an intake duct of said refrigeration unit.

Further characteristics and advantages of the invention will become better apparent from the description of a preferred but not exclusive embodiment of the pulverizer, illustrated by way of non-limiting example in the accompanying drawings, wherein:

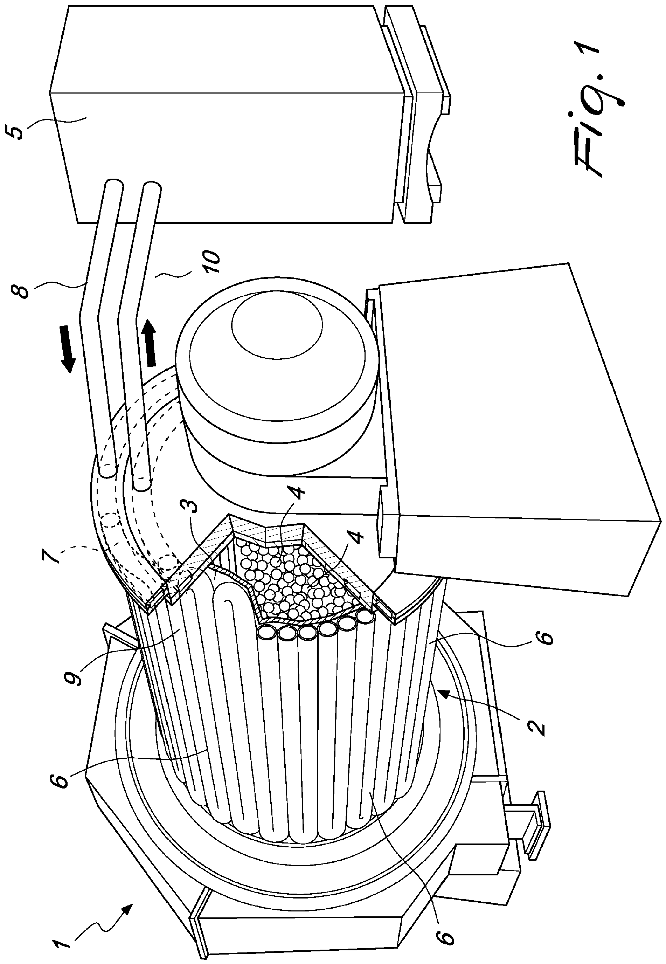

Figure 1 is a schematic view of a possible embodiment of a pulverizer according to the invention;

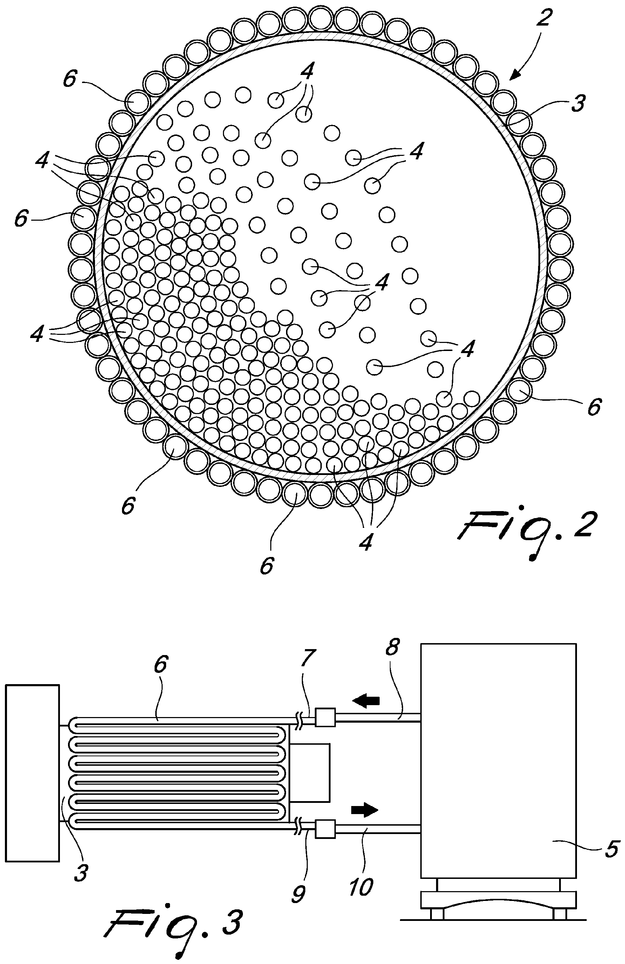

Figure 2 is a schematic sectional view, taken along a transverse plane, of a drum of a pulverizer according to the invention;
Figure 3 is a schematic side view of a pulverizer according to the invention.

With particular reference to the figures, a pulverizer according to the invention is generally designated by the reference numeral 1.

The pulverizer 1 comprises a ball mill 2 provided with a steel drum 3 within which a plurality of steel balls 4 is contained.

The pulverizer 1 is configured to obtain a powder having a particle size comprised between 25 µm and 500 µm: i.e., it must be capable of providing a powder in which the predominant size of each grain is comprised between 25 µm and 500 µm.

With particular reference to a preferred embodiment, at least 60% by mass of the powder exiting the pulverizer 1 must have a particle size preferably comprised between 200 µm and 300 µm (identifying with the value 250 µm the embodiment deemed ideal), i.e., a powder in which the prevailing size of each grain is comprised between 200 µm and 300 µm (identifying with the value 250 µm the embodiment deemed ideal).

It is specified that it is possible to achieve better results, in terms of utilization of the powders exiting the pulverizer 1, if at least 70% thereof have a particle size preferably comprised between 200 µm and 300 µm (identifying with the value 250 µm the embodiment deemed ideal), i.e., a powder in which the prevailing size of each grain is comprised between 200 µm and 300 µm (identifying with the value 250 µm the embodiment deemed ideal).

In general, the higher the mass percentage of powders with a particle size below the predefined threshold value, the better the result of the process performed by the pulverizer 1.

Moreover, the pulverizer comprises a refrigeration unit 5 suitable for the delivery of a carrier fluid at a temperature below -150°C.

The pulverizer 1 further comprises a circuit 6 for the refrigeration of at least one portion of the steel drum 3 provided with a sleeve 7 for the inflow of the carrier fluid dispensed by the refrigeration unit 5 (through a first duct 8) and an ejection sleeve 9 for ejecting the carrier fluid at the end of its complete circulation in the circuit 6 and its transfer to an intake duct 10 of the refrigeration unit 5. The ejection sleeve 9 is therefore intended for discharge, constituting a terminal for outflow of the exhausted carrier fluid.

In the accompanying figures, the refrigeration circuit 6 is shown as a pipe (substantially a coil) arranged along the outer surface of the drum 3, so as to remove heat from it by conduction.

In this case, a rotating (annular) distribution unit may conveniently be interposed between the inflow sleeve 7 and the first duct 8, allowing to feed the circuit 6 that is integral with the rotating drum 3 through the refrigeration unit 5, although the unit 5 is fixed, allowing free rotations of the drum 3. Similarly, a rotating (annular) distribution unit is also interposed between the ejection sleeve 9 of the circuit 6 and the intake duct 10 of the refrigeration unit 5 to allow the free rotation of the drum 3 (and of the circuit 6 and the ports 7 and 9 with it) with respect to the fixed unit 5 (just as the ducts 8 and 10 are fixed).

Obviously, this graphical representation is provided solely by way of non-limiting example regarding one of the many possible embodiments: the adoption of a completely different refrigeration circuit 6 for reducing the temperature of the drum 3 (and in particular of its contents) is not ruled out.

The delivery of a carrier fluid (for example liquid or gaseous nitrogen or liquid or gaseous helium or liquid or gaseous argon) directly onto the surfaces of the drum 3 or inside it is also not ruled out.

It should be noted that the ball mill 2 can advantageously comprise at least one motor drive element configured to actuate the rotation of the drum 3 according to rules of motion that can be programmed on a control and management unit.

In this way it is possible to adopt a rule of motion that allows to maximize the effect of the balls on the material placed inside the drum 3. The motor drive element of the drum 3 may be an electric motor driven by means of an inverter, so as to control the direction and rotation rate of the drum 3 in addition to being able to control the duration of the work cycle.

In greater detail, it should be specified that the pulverizer 1 according to the invention comprises, arranged at a component chosen between the drum 3 and the refrigeration circuit 6, at least one sensor of a type chosen from temperature sensors (by means of which, for example, it is possible to monitor the temperature inside the drum 3 or the temperature of the carrier fluid circulating in the circuit 6), carrier fluid flow sensors (so as to set the flow rate of the carrier fluid flow in the circuit 6 such as to ensure that the contents of drum 3 are properly kept at a preset temperature), vision sensors for checking the size of the individual particles subjected to milling.

By means of the vision sensors it is possible to identify the particle size of the powder grains instant by instant and consequently control the motion of the drum 3 to achieve the preset values of said parameter in the shortest possible time.

The refrigeration unit 5 may conveniently be a cryocooler: this definition means a machine capable of making its carrier fluid reach temperatures below 93 K (-179.85°C).

The fact that the carrier fluid can be brought to very low temperatures is a great advantage, since the effect is to embrittle the raw material processed inside the drum 3.

In particular, it has been shown above that the pulverizer 1 according to the invention is suitable for pulverizing materials selected from waste fabrics, excess production and/or stock remainders, waste items of clothing, waste hides, waste clothing accessories and the like, the fibers of which are normally (at ambient temperature) flexible, resilient, particularly prone to dissipate energy and extremely deformable. Obviously, these characteristics of these materials make them completely unsuitable to be effectively pulverized inside a ball mill 2; if these materials are instead kept at cryogenic temperatures they undergo changes that make them more rigid and brittle, and they can therefore be pulverized through collisions with the balls 4 inside the drum 3. The lower (and closer to the vitrification temperature of the materials listed above) said temperatures are, the more efficient and compliant the resulting pulverization obtained will be. Obviously, different operating temperatures of the carrier fluid are to be adopted depending on the different type of raw material introduced (natural fibers, synthetic fibers, hides, etc.).

The raw material fed into the drum 3 is already coarsely comminuted so that each fragment can best react to the thermal and mechanical stresses inside the pulverizer 1 according to the invention.

The refrigeration unit 5 may preferably be chosen from dilution cryocoolers (which allow to reach temperatures close to 0 K, corresponding to the so-called absolute zero, which in degrees Celsius has a value of -273.15° C), a cryocooler based on the Gifford-McMahon refrigeration principle (in which a pneumatically driven refrigeration cycle is provided), a cryocooler with cascade compressors, a cryocooler based on liquid nitrogen evaporation, a cryocooler based on liquid helium evaporation, a cryocooler based on liquid argon evaporation, and the like.

The choice of having a ball mill 2 in which the drum 3 and the balls 4 are made of steel (preferably stainless steel) is derived from the need to use a material that does not impair its mechanical properties when it works at cryogenic temperatures.

The use of a generic ball mill 2 in a pulverizer 1 of the type currently described would result in frequent breakages and disruptions. For example, the balls (especially if ceramic or made of flint) would also become brittle, suffering damage during mill operation; similar problems might occur with mills equipped with a drum made of materials other than steel (preferably of the stainless type).

With particular reference to an embodiment of unquestionable interest in application and practice, it is specified that the drum 3 can advantageously be configured for the instantaneous accommodation of a predefined batch of material to be pulverized, with consequent definition of the dimensions of its internal chamber. In practice, the design of the ball mill 2 (in particular of its drum 3) is commensurate with the volume of the individual batch that the mill 2 must be able to handle during each individual pulverization treatment.

The productivity of the pulverizer 1 is the parameter that guides its design.

By way of example, it is specified that a productivity considered valid for a prototype of assured practical interest is 50 kg of pulverized textile waste per hour (assuming that the material fed into the drum is constituted by fragments having a maximum size of no more than 6 mm).

The drum 3 must comprise at least one opening for the insertion of the material to be pulverized and for the extraction of the resulting powders.

Preferably, such openings are two: a first intake opening for the insertion of the material to be pulverized, and a second discharge opening for the extraction of the resulting powders. The operations for introducing the raw material and for extracting the powders may be manual (in which an assigned operator performs them directly), semi-automatic (for example, providing for an operator to feed the raw material but performing extraction automatically to prevent the operator from coming into contact with the powders, which are at near cryogenic temperatures), or automatic (in which both the insertion of the raw material and the extraction of the powders are performed by means of automated apparatuses).

In particular, the pulverizer 1 according to the invention may conveniently comprise at least one conveyance line configured for an operation chosen from conveyance toward the drum 3 of the raw material (for example textile waste fragments) to be pulverized and transfer of the powders obtained at the end of the operating cycle of the ball mill 2 toward a subsequent operating station.

Obviously, the pulverizer 1 according to the invention provides for two distinct modes of operation.

A first mode of operation provides for batch-type milling, in which the drum 3 is loaded, while the pulverizer 1 is off, with the material listed above, and then the drum 3 is closed and the milling cycle is started. When milling is complete, it is necessary to stop the pulverizer 1 and recover the powder thus produced.

A second mode of operation provides for continuous milling: in this case the loading of the material listed above occurs continuously during the operation of the pulverizer 1, and likewise the recovery of the produced powder also occurs continuously when it reaches the desired (set) particle size level, estimated, for example, by means of a classifier inserted in a recirculating system.

The protective scope of the present invention also extends to any apparatus for the production of a semifinished product constituting a raw material for additive manufacturing, which comprises at least one shredder of a type preferably chosen from blade crushers, impact mills, mills and the like (capable of providing fragments having a maximum size of less than 15 mm, preferably on the order of 5-7 mm). Said apparatus, downstream of the shredder, favorably comprises at least one pulverizer 1 of the type described above.

Moreover, in such apparatus there is at least one mixer for mixing the powder in output from the pulverizer 1 with at least one other substance preferably chosen from a solvent, polyethylene glycol, a polyether, and organic binders, consequently obtaining a mixture that constitutes the semifinished product (to which the production of the apparatus relates).

The term mixture means any mixture, mix, or heterogeneous combination that is in the solid viscous, powdery, and liquid state (granules, pellets, blocks preferably, but not exclusively, of the thermoplastic type).

Moreover, the apparatus can efficiently comprise at least one extruder of the mixture, constituting the semifinished product, arranged on a handling unit with at least two axes.

It is specified that the mixer, in one possible embodiment, may be integrated in the extruder that performs the mixing of the substances at its inlets before dispensing them.

The extruder may be suitable for additive molding, injection molding and, in general, any mode of provision of the finished product that involves softening the materials to give them the desired new shape.

In this embodiment, the mobile extruder is able to deposit layers of mixture on a predefined surface, consequently providing at least one portion of a product chosen from an item of clothing, an upholstery element, a furniture item, a fashion accessory, a gadget, a packaging component and the like. This deposition performed with the mobile extruder constitutes an implementation of the technique known as additive manufacturing, although use of the extruder for injection molding and/or any other type of molding is not excluded.

The pulverizer 1 according to the invention is therefore found to be a device of a totally new type with respect to the background art, since only through experimental laboratory processes it is possible to provide pulverization of the materials of interest (for example textiles, hides and the like) according to the dimensional parameters of interest (for example, with a powder particle size on the order of 250 µm).

The pulverizer 1 according to the invention is in practice constituted by a ball mill 2 with a cryogenic milling chamber (i.e., the chamber inside the drum 3): said pulverizer 1, as shown, is suitable for automatic or partially automatic operation.

By combining the increase in brittleness of the raw material obtained by operating in a cryogenic environment with the effects of the balls 4 (to which it is possible to impart the desired kinetic energy so as to ensure the maximum pulverization effect of the raw material fragments present in the drum 3) it is possible to operate by using either a heterogeneous input matrix, with stochastic randomness of the various components, or a homogeneous matrix, obtaining in any case the desired degree of pulverization.

The pulverizer 1, when installed in the apparatus according to the invention, must provide for upstream and downstream conveyors for its connection to the other operating stages that are present. In order to ensure the proper control of the pulverizer 1 by the other stages of the apparatus, the adoption of buffer stations interposed between the pulverizer 1 and the stages contiguous thereto is provided.

Preferably, the pulverizer 1 is interfaced with the other stages of the apparatus according to the invention with a supervision and data acquisition control, in accordance with the logic criteria of Industry 4.0.

Advantageously, the present invention solves the problems described above, providing a pulverizer 1 suitable for operating on materials selected from waste fabrics, excess production and/or stock remainders, waste items of clothing, waste hides, waste clothing accessories, and the like.

Conveniently, the pulverizer 1 according to the invention is adapted to provide a material that is divided into very small, homogeneous particles (as specified, the currently preferred goal is to obtain a powder having a particle size on the order of 250 µm, although the adoption of different particle size values within the previously identified ranges as well is not ruled out in the future).

Advantageously, the pulverizer 1 according to the invention is suitable to provide a material that can be used to implement the teachings of application WO2022089782 for the production of items of clothing and/or upholstery and/or furniture items with high quality standards.

Favorably, the pulverizer 1 according to the invention is adapted to provide a material that can be used to implement the teachings of WO2022089782 for the production of semifinished products suitable for the subsequent production of items of clothing and/or upholstery and/or furniture items with high quality standards.

Validly, the pulverizer 1 according to the invention is relatively simple to provide in practice and of low cost: these characteristics make the pulverizer 1 according to the invention and the apparatus that comprises it innovations of assured application.

The invention thus conceived is susceptible of numerous modifications and variations, all of which are within the scope of the accompanying claims; all the details may furthermore be replaced with other technically equivalent elements.

In the embodiments shown, individual characteristics, given in relation to specific examples, may actually be interchanged with other different characteristics that exist in other embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A pulverizer, **characterized in that** it comprises
- a ball mill (2) provided with a steel drum (3) within which a plurality of steel balls (4) is contained, configured to obtain a powder of which at least 60% by mass has a particle size comprised between 25 µm and 500 µm, preferably comprised between 200 µm and 300 µm, i.e., with a predominant size of each powder grain comprised between 25 µm and 500 µm, preferably comprised between 200 µm and 300 µm;
- a refrigeration unit (5) suitable for the delivery of a carrier fluid at a temperature below -150° C;
- a refrigeration circuit (6) for the refrigeration of at least one portion of said steel drum (3) provided with a sleeve (7) for the inflow of said carrier fluid dispensed by said refrigeration unit (5) and an ejection sleeve (9) for the ejection of said carrier fluid at the end of its complete circulation in the refrigeration circuit (6) and its transfer to an intake duct (10) of said refrigeration unit (5).

2. The pulverizer according to claim 1, **characterized in that** said ball mill (2) comprises at least one motor drive element configured to actuate the rotation of said drum (3) according to rules of motion that can be programmed on a control and management unit.

3. The pulverizer according to one or more of the preceding claims, **characterized in that** it comprises, arranged at a component chosen from said drum (3) and said refrigeration circuit (6), at least one sensor of a type chosen from temperature sensors, carrier fluid flow sensors, vision sensors for verifying the size of the individual particles subjected to milling.

4. The pulverizer according to one or more of the preceding claims, **characterized in that** said refrigeration unit (5) is a cryogenic cryocooler of a type chosen from a dilution cryocooler, a cryocooler based on the Gifford-McMahon refrigeration principle, a cryocooler with cascade compressors, a cryocooler based on liquid nitrogen evaporation, a cryocooler based on liquid helium evaporation, a cryocooler based on liquid argon evaporation, and the like.

5. The pulverizer according to one or more of the preceding claims, **characterized in that** said drum (3) is configured for the instantaneous accommodation of a predefined batch of material to be pulverized, consequently defining the dimensions of its internal chamber.

6. The pulverizer according to one or more of the preceding claims, **characterized in that** said drum (3) comprises at least one opening for the insertion of the material to be pulverized and for the extraction of the resulting powders.

7. The pulverizer according to claim 6, **characterized in that** said openings are two, a first intake opening for the insertion, of a type chosen from manual, semi-automatic, automatic, of the material to be pulverized, and a second discharge opening for the extraction, of a type chosen from manual, semi-automatic, automatic, of the resulting powders.

8. The pulverizer according to one or more of the preceding claims, **characterized in that** it comprises at least one conveyance line configured for an operation chosen from the conveyance toward said drum (3) of said material to be pulverized and the transfer toward a subsequent operating station of the resulting powders.

9. An apparatus for producing a semifinished product constituting a raw material for additive manufacturing, **characterized in that** it comprises
- at least one shredder of a type preferably chosen from blade crushers, impact mills, mills and the like;
- at least one pulverizer (1) according to one or more of the preceding claims;
- at least one mixer for mixing the powder in output from said pulverizer (1) with at least one other substance preferably chosen from a solvent, polyethylene glycol, a polyether, and organic binders, consequently obtaining a mixture which constitutes said semifinished product.

10. The apparatus according to claim 9, **characterized in that** it comprises at least one extruder of said mixture, constituting said semifinished product, which is arranged on a handling unit with at least two axes for the deposition of layers of said mixture on a predefined surface, consequently providing at least one portion of a product chosen from an item of clothing, an upholstery element, a furniture item, a fashion accessory, a gadget, a packaging component and the like, according to a technique of the type of so-called additive manufacturing.
